# EUROPEAN PATENT APPLICATION

(11) **EP 0 810 104 A1**
(43) Date of publication of application: **03.12.1997**
(21) Application number: 97108535.2
(22) Date of filing: 27.05.1997
(51) Int. Cl.: B60C 11/12

(54) **Treads for tires with siped elastomeric blocks**

(30) Priority: 28.05.1996 EP 96108426
(71) Applicant: THE GOODYEAR TIRE & RUBBER COMPANY, Akron, Ohio 44316-0001 (US)
(72) Inventor: Fletchner, Charles, 63140 Chatel-Guyon (FR); Girault, Jean-marie, 63000 Clermont-Ferrand (FR)
(74) Representative: Leitz, Paul

(57) **Abstract**

A tread for WINTER tires consists of elastomeric material extending in a circumferential direction around the axis of rotation of the tire. The tread includes several grooves which extend circumferentially and a multitude of grooves which extend laterally between a pair of shoulders, delimiting elastomeric blocks. The elastomeric blocks include sipes delimiting two opposing surfaces within the blocks. The sipes may define a portion of a cylindrical surface over at least part of their radial and lateral area.

## Description

The invention refers to treads for tires, where the elastomeric blocks are provided with sipes designed to improve the grip of the tires on paved surfaces, especially on winter surfaces.

In general the treads of tires have several grooves that extend in a circumferential direction and numerous grooves that extend in the lateral direction defining the elastomeric blocks that come in contact with the ground surface. The dimensions and the particular configuration of these elastomeric blocks contribute significantly to the overall performance of the tire.

The elastomeric blocks of winter tires as well as those of "all season" tires are normally provided with many slits or sipes. These sipes may have a radial depth comparable to the radial depth of the grooves surrounding the elastomeric blocks or they may have a depth that is somewhat less. "Radial" and "radially" are used to indicate the directions that either go towards or away from the axis of rotation of the tire. The depth may also vary along the sipe. The elevated local pressure exerted at each defined edge of the sipe in the elastomeric blocks improves the collision action of the tread on the surface, and thus enables the tire to show excellent handling on ice or snow.

The sipes which range in thickness from zero to 2 mm, and preferably have a thickness of about 0.4 mm may be arranged according to different orientations within the tread pattern of the tire such as described for example in EP-A-0 485 884. A radial section through the sipes may also be a broken or undulating line such as described in FR-A-2 703 002 or a tracing in the form of a curved line, such as described in DE-A-41 07 547. FR-A-791 250 provides for the sipes in the elastomeric blocks to have a sinusoidally undulated or similar form, where the generating lines of the cylindrical surfaces which laterally define the sipes are oblique with regard to the tread surface of the tire.

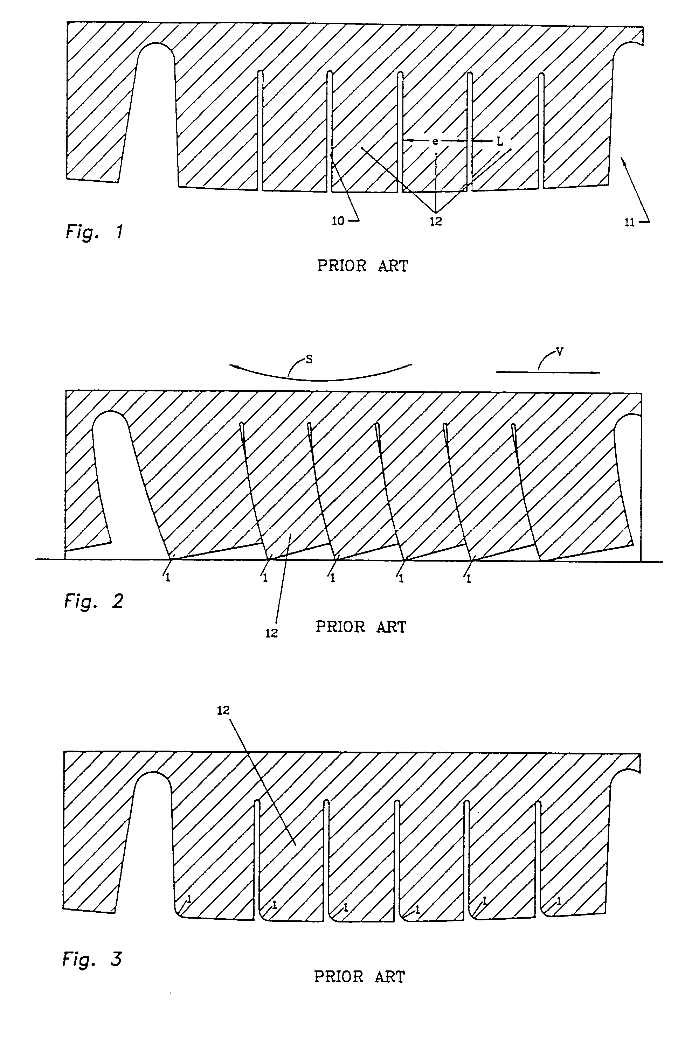

Referring to Figures 1 and 2, sipes 10 cut blocks 11 of the tread into segments 12 of elastomeric material. The thickness "e" of the segments varies generally between two and eight millimeters (10⁻³ m), for passenger car tires. Subsequently, we shall refer to them simply as "segments 12". Arrows S and V indicate the direction of rotation of the wheel and the travel direction of the vehicle, respectively.

When the tires are used on snow or ice, segments 12 are being inclined through braking, acceleration and the centrifugal force to which the tread is subjected (see Figure 2). The edges 1 of the segments then cut into the snow. When the tires slide or skid, they scrape the snow or ice in the same manner as a grater. Thus, these segments appreciably improve the car's handling potential under such conditions.

Consequently, handling on snow depends, among other factors, on the mobility of the segments 12, and therefore on their thickness as well as the thickness "L" of the sipes 10 which limit the movements of the segments 12. If the segments 12 are too mobile, they flatten on the ground and thus, the effect of the edges 1 is partially eliminated; if they are too rigid, they may incline little or not at all and their effect, is therefore, also diminished. In addition, wear may reduce the height of the segments, and consequently reduce their mobility, altering thereby their grip on snow.

In addition, the same bending phenomena of the segments 12 takes place on ground that is not covered by snow or ice, and has the effect of wearing down the edges 1 which become rounded after some wear of the tire, generally when the car has run a distance of about 3000 kilometers. The edges lose their biting power and road grip decreases, such as shown in Figure 3.

To eliminate this effect, inclined sipes, i.e. sipes which are not perpendicular to the tread surface have been used; this subject is the object of French patent 2 418 719. The inclined sipes, however, have the disadvantage of forming segments of a constant thickness throughout their entire depth. Thus after wear, the shorter segments become more rigid. Their mobility is reduced and the tire's road grip on snow or ice is diminished.

The object of the invention is to create sipes and segments for the treads of winter tires or of all-season tires which do not have the disadvantages of prior art tires and which have good braking properties on wet ground, as well as good traction properties on roads that are covered by snow or ice.

Another object of the invention is to propose treads for tires whose performance will vary very little during use and during the wear of the tire.

Such a tread, in accordance with the present invention is defined in the attached claim 1. Preferred ways to implement the invention are defined in the dependent claims. The invention also refers to tires that have such treads.

For the benefit of the man skilled in the art, Figures 4-19 illustrate the preferred ways of carrying out the invention. These embodiments are given for illustrative purposes and may be modified in a number of ways, while still remaining within the scope of the invention as defined by the claims.
Figure 1 represents, according to the state of the art, a section through an elastomeric block of a new and unloaded tire where the sipes are normal to the radially exterior surface of the elastomeric blocks;
Figure 2 the loaded tire under stress; and
Figure 3 the slightly worn unloaded tire.
Figure 4 shows, according to a first embodiment of the invention, a section through an elastomeric block of a new and unloaded tire;
Figure 5 the loaded tire under stress; and
Figure 6 the slightly worn, unloaded tire.
Figure 7 represents a cross section of an elastomeric block of a new unloaded tire according to a second embodiment of the invention;
Figure 8 the loaded tire under stress; and
Figure 9 the slightly worn, unloaded tire.
Figures 10 and 11 represent sections through new, unloaded elastomeric blocks according to the second embodiment of the invention.
Figure 12 represents a cross section of an elastomeric block provided with sipes defining segments of different thicknesses Eᵢ.
Figure 13 represents a cross section of an elastomeric block provided with sipes of different thicknesses Lᵢ.
Figures 14-16 show sections of sipes having different radii.
Figure 17 represents a view from above an elastomeric block, provided with inter-laced sipes.
Figures 18 and 19 each show a view from above a pair of adjacent sipes, which have respectively the form of a broken line or of a sinusoid.

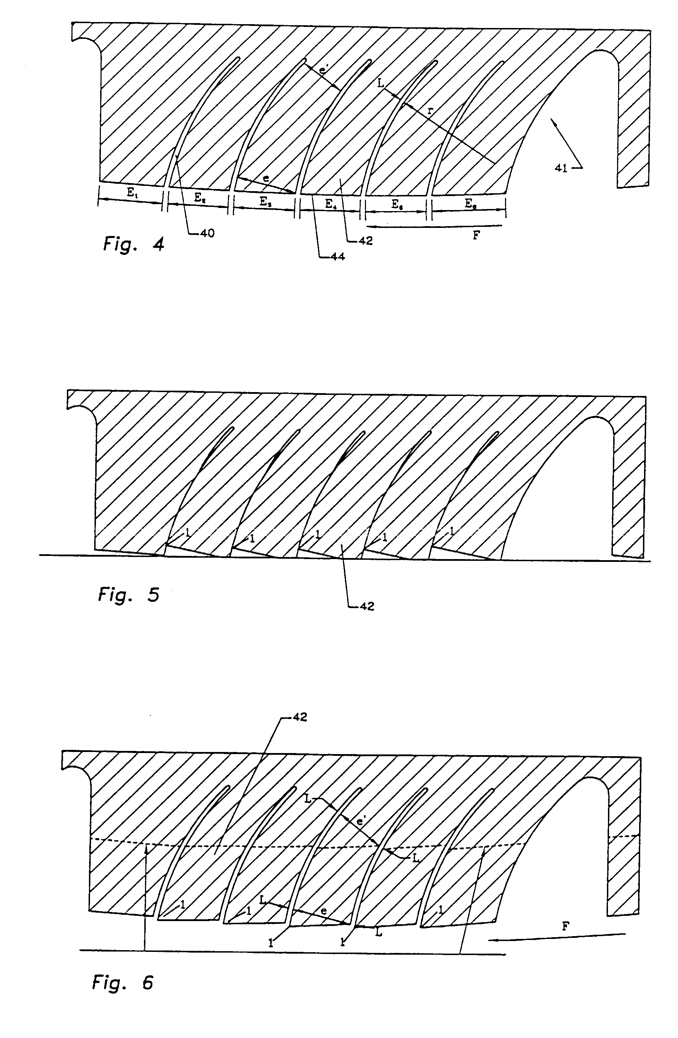

The present invention in its first embodiment shown in Figures 4-6, arranges sipes of zero or non-zero thickness, of which at least one of the surfaces, as defined by a sipe within the elastomeric block, is in the form of a portion of a cylindrical surface, sometimes referred to herein as a "cylindrical surface". The cylindrical surface in this case is generated by a straight line, a generatrix or generating line, which is perpendicular to a plane P which may be the plane of the drawing. The straight line is displaced by following a plane curve C, the directrix or directing line, which is located in the plane P.

The generating lines of the cylindrical surfaces are preferably, and without constituting a limitation, lines parallel to a tangent to the closest portion of a surface OS. The surface OS is defined as following the radially most exterior contour of the tread, or in other words, the parts of the tread which define the surface OS which is in contact with the ground in the footprint of the tire. A point on surface OS is illustrated by reference numeral 44.

The directing line (directrix) C of the cylindrical surface is a plane curve that is not closed, which may, more specifically, be an arc. By arc is meant a plane curve without any point of inflexion. The arc may be an arc of a circle. In this case, the radius of the curve "r" is between ½ and 10 times the total radial depth of the sipe, and preferably between the ½ and 3 times the total radial depth of the sipe.

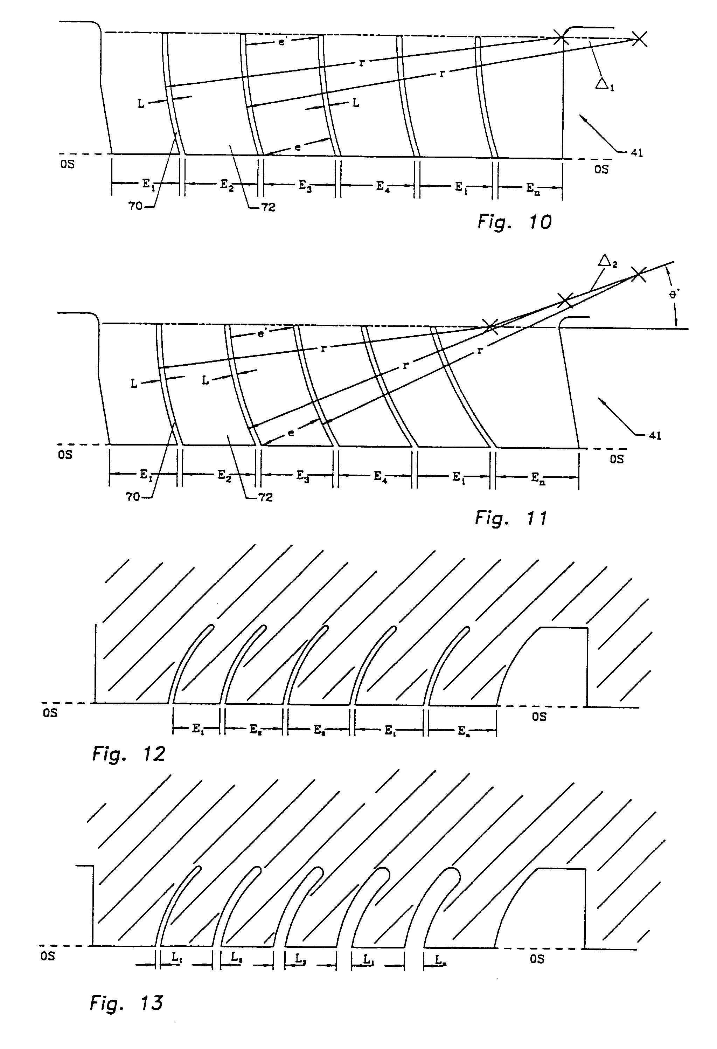

The center of curvature may be radially interior (see e.g. Figure 10) or exterior (see e.g. Figure 4) to the surface 44. When the directing line is an arc of a circle, the distance from the center of curvature to this surface 44 is less than the radius r, if it is radially interior and between 0 and the length of the radius r, from which is subtracted the total radial depth of the sipe, if it is radially exterior.

The radius of curvature r of the circle arc constituting the directing line C, may be constant, vary continuously or vary in steps, by passing for example from a value of 7 mm for one part of the curve to 9 mm for another part.

Referring to Figure 4, the shape of an elastomeric block 41 on a new unloaded tire of the invention is illustrated. The block 41 is subjected to the force F of the tire on the ground. The sipes 40 cut block 41 of elastomeric material into segments 42. The thicknesses E2 and E5 of the segments 42, as they emerge on the exterior surface of the tire, have been selected constant. In the represented case, the sipes 40 in the form of a portion of a cylindrical surface have their centers of curvature radially outside of the surface 44; in the instant case, the sipes 40 have their concave sides directed toward the portion of the surface OS closest to them. Any straight line perpendicular to this portion of the surface OS intersects at most one point of the surface defined by a sipe in the elastomeric material.

This embodiment combines two advantages:
1. when carrying a load, segments 42 deform in the way shown in Figure 5. This deformation induces, after a certain period of use, specific wearing of segments 42, which has the effect of maintaining the edges 1, if not sharpening them. This effect is more specifically illustrated in Figure 6, which represents an unloaded, slightly worn tire. It appears that road grip on ice or snow is preserved. In Figure 6 the dotted lines show the tire when it is half worn. It is evident that the cutting power of the edges 1 is preserved.
2. under load the segments 42, by being deformed, lean one against each other and the sipes then close. The amount of the displacement of the segments depends on the ratio between the thickness "L" of the sipes and the thickness "e" of the segments, which can be inferred from Figures 4 and 5.

As illustrated in Figure 4, according to this embodiment of the invention, variation in the thickness "e" of the segments is an inverse function of the depth of the segments. The variation of the thickness "e" depends on the curvature of the sipes. Therefore, it is possible to control the mobility of the segments, in order to keep such substantially constant during wear, by judiciously determining the following parameters:
- the thickness of the sipes;
- the curvature of the sipes; and
- the apparent thickness "Eᵢ" (i:1, 2 ...) of the segments which may or may not be equal.

After wear, the real thickness "e" of the segments, that is, the minimal distance which separates two adjacent sipes at a given position of the segment, diminishes, but their surface on the ground remains the same. It follows that the adhesion of the elastomer on any kind of surface, is preserved.

The grip on ice and snow is also maintained because of the invariable mobility of the segments during practically the entire life of the tire.

In order to understand the problem of how the segments adhere on ice or snow, it should be mentioned, first of all, that on slippery surfaces, each segment defined by the sipes and the grooves may slide individually in the footprint of the tire. A segment acquires partial independence and deforms independently from the other segments. This independence allows for maximal amplitude of the deformations. Thus, it is the movement of the segments, under acceleration or braking, which favors the working of the edges.

On dry ground the segments cannot slide. Tied to each other by their grip to the ground, leaning one against the other through the crushing action of the load, they become interlocked in the footprint of the tire, even though they are divided by voids and sipes. Thus, having lost their independence, the segments cannot deform individually under acceleration and braking forces. Consequently the edges are not impaired by wear, but conversely, become sharper.

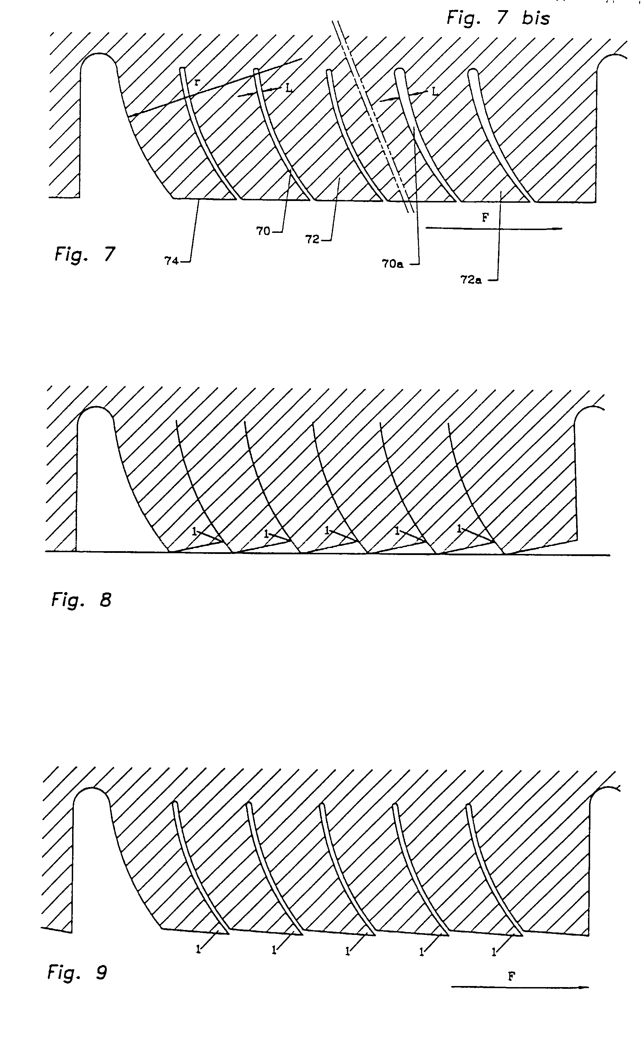

In the embodiment of the invention represented in Figures 7, 8 and 9, the sipes 70 in the form of cylindrical surfaces have their center(s) of curvature localized radially inward of the surface 74; in the instant case, sipes 70 have their convex side oriented towards the surface 74. Any straight line perpendicular to the closest portion of the surface OS intersects at most at one point the surface defined by such sipe in the elastomeric material.

Although in theory the exact position of the centers of curvature are not prescribed, two interesting variants of the second embodiment of the invention are represented in figures 10 and 11; the centers of curvature X are here aligned on straight lines Δi, whereas the radii of curvature are kept substantially constant. In a first embodiment the line Δ1 is substantially parallel to the surface, whereas in a second embodiment the line Δ2 is inclined by an angle θ with respect to this surface 74. This angle θ, which influences the relative orientation of neighboring sipes with respect to the surface 74, can have a value of 0 degrees to 45 degrees.

This embodiment, though not as interesting as the embodiment shown in Figure 4, is, nonetheless, viable. It has the further advantage of being able to use sipes 70, whose thickness "L" varies as a direct function of their depth, without causing a release problem for the cured tires from the molds. This preferential embodiment is represented on the right side of Figure 7 (figure 7 bis). Thus cut, the segments 72a resting one against the other when the tire is new, have their mobility limited by the thickness "L" of the siped 70a. When the latter become wider and wider as the tire wears down, and therefore, the segments obtain thus greater freedom of movement. Consequently, if the thickness variation of the sipes is judiciously chosen, the segments can maintain a constant mobility and thus preserve their grip on snow or ice.

The solution to vary the thickness of the sipes as a direct or inverse function of their radial depth may be applied equally well to different ways of carrying out the invention, and in particular to those shown in Figures 4 and 7.

The grooves of the tread pattern must be designed so as to promote different arrangements of the sipes, without limiting the layout or the dimensions of the elastomeric blocks. The latter may be associated with each other, connected to each other or they may have a "rib" shape, i.e. the shape of a continuous circumferentially extending elastomeric material delimited by two grooves taking the form of a straight line or a zig-zag.

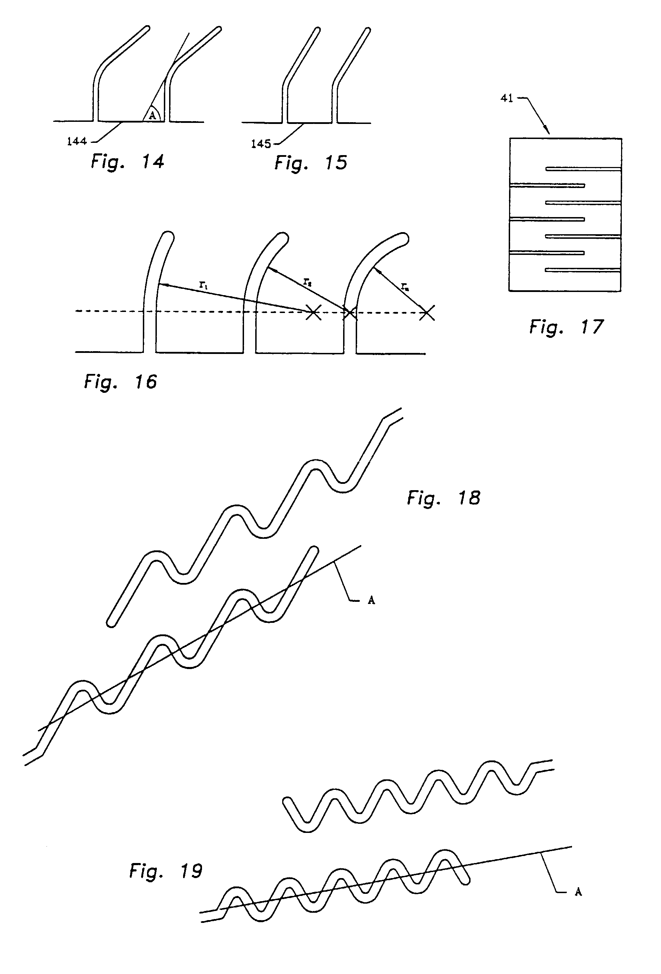

The sipes may be inter-laced, as shown in Figure 17; they may cut two sides or only one side of the block which contains them, without any limitation as to form, orientation or dimension. The distance Eᵢ, which separates the sipes may or may not be equal such as illustrated in Figure 12. They may be associated with other sipes having any form, in the same elastomeric block, or in other blocks.

They may be arranged in zones, each bearing different sipes, and especially may be, but without limitation, formed by dividing the width of the tread itself.

It is also possible to prolong the curve at each of its ends or at one of them only, by a rectilinear portion such as shown in Figures 14 and 15. In this case also, any straight line normal to the surface 144,145 intersects the surface delimited by a sipe within the elastomeric material at one point only; this means that when a sipe is cut by a plane perpendicular to the surface, a tangent which is displaced along the intersection, from the surface of the block towards the interior of the block, forms with the surface an angle A which has a monotonous increase or decrease without passing through the value of 90 degrees. Monotonous means that the angle respectively increases or decreases either continuously or in stages. "Without passing through the value of 90 degrees" means that the angle may be 90 degrees at the tread surface and increase or, in a second embodiment, decrease monotonously radially inwardly; an angle A of e.g. 85 degrees at the tread surface and increasing to 105 degrees at the greatest sipe depth would result in the segments being subjected to a folding force in the footprint of the tire and such angle variation is not in accordance with the present invention.

In such circumstances the curve may be very short with a very small radius of curvature. The curvature of the sipes may be different within the same block, such as that shown in Figure 16.

According to a preferred embodiment of the invention, the sipes define cylindrical surfaces over more than 80% of the length of the directing line, with a radius of curvature substantially constant and having a value between the total radial ½ depth of the sipe and 30 mm.

The sipes can also be undulated, take the form of a broken line, as shown in Figure 18, can be sinusoidal as shown in Figure 19, or have other similar configurations. In this case, the actual generating line of the surfaces defined by the segments is an undulated, broken, sinusoidal or similar line. The medium axis A of the said line is perpendicular to a plane P, which in a preferred embodiment is substantially normal to the surface of the tread. The medium axis A is displaced by following constantly the fixed curve C, the directing line, situated in plane P. The plane which contains the broken, undulated, sinusoidal or similar line remains continually normal to the directing line. By medium axis of a straight, undulated, broken or similar line is meant the straight line which divides the tracing of the said line in two substantially equal halves, in the direction of the longest extension. Put more generally, at least a portion of the neighboring faces of the sipes is defined by a generating line, whose medium axis forms a constant angle, inferior to 30 degrees with a plane tangent to the closest portion of the tread surface or surface OS, and which moves parallel to itself along a directing line, which is a plane curve, extending from the closest portion of the tread surface radially into the interior of the tire at a distance defining the depth of the sipe; a tangent to any point of this plane curve, forming with the tread surface an angle increasing, or in a second embodiment decreasing monotonously. Put in other words, the medium axis forms a constant angle, superior to 60 degrees and preferably 75 degrees with the perpendicular to the point of the surface OS, where it cuts or touches said surface OS.

Thus the sipes that are defined by undulated, broken, sinusoidal or similar surfaces have geometric characteristics comparable to those of the cylindrical surfaces described previously. Note that in Figures 18 and 19, pairs of adjacent sipes having a certain thickness are represented; the middle axis A has been traced based on the line passing through the middle of the sipe.

The edge of a sipe whose generating line is a straight line, or the middle axis A of an undulated or similar sipe, which extends transversely in the direction of the tire's rotation, forms with the equatorial plane an angle between 65 degrees and 115 degrees, and preferably between 75 and 105 degrees. It should be noted that the parts of the edge which form a 90 degree angle with the equatorial plane have an optimal effect in regards to traction, while the parts that are parallel to the equatorial plane improve transversal grip.

## Claims

1. A tread for tires of the winter type, comprising an elastomeric material extending in the circumferential direction around the axis of rotation of the tire, the said tread having:
- a pair of shoulders which flank the lateral edges of the tread;
- several grooves which extend circumferentially and several grooves which extend laterally between the pair of shoulders defining elastomeric blocks;
- at least one of the elastomeric blocks having a sipe defining two opposing surfaces within said elastomeric block;
wherein under conditions where the tire is normally inflated and unloaded, a portion of at least one of said opposing surfaces is defined by a generating line having its medium axis forming a constant angle, inferior to 30 degrees with the plane tangent to the closest portion of a surface OS, defined by the radially most exterior contour of the tread, and which generating line is moved parallel to itself along a plane curve C which extends from the closest portion of the surface OS radially into the interior of the tread over a distance defining the depth of the sipe, a tangent displaced along this plane curve C forming with the surface OS an angle A increasing or, in a second embodiment of the invention, decreasing monotonously.

2. The tread according to claim 1, wherein the curve C is at least partly constituted by an arc of a circle.

3. The tread according to claim 2, wherein the curve C is at least partly composed of several portions of adjacent arcs of circles, whose radii differ at most by 50%.

4. The tread according to any of the preceding claims wherein the curve C has at least at one of its ends a rectilinear part representing at most 20% of the total length of curve C.

5. The tread according to any of the preceding claims wherein the curve C includes a portion having a radius of curvature ranging between the total radial half depth of the sipe and 30 mm.

6. The tread according to any of the preceding claims wherein the distance which spaces two opposed sipe surfaces is constant and takes a value between 0.2 and 1 mm.

7. The tread according to any of the preceding claims wherein the distance which spaces two opposed sipe surfaces varies as a function of their radial position.

8. The tread according to any of the preceding claims wherein the distance between two neighboring sipes varies, so as to define segments of different thicknesses.

9. The tread according to any of the preceding claims wherein the generating line is a straight, broken, undulated, sinusoidal or similar line.

10. The tread according to any of the preceding claims wherein the sipes are inter-laced, emerge from one side of the elastomeric blocks only, or from two sides.

11. The tread according to any of the preceding claims wherein the sipes are oriented differently from one block to another, so that a tangent to any point of said plane curve C forms with the surface OS in one block a monotonously increasing angle and in the other block a monotonously decreasing angle.

12. The tread according to any of the preceding claims wherein the radii rᵢ of the curves C vary from one segment to another.

13. The tread according to any of the preceding claims wherein the radial distance(s) of the center(s) of the radius(i) of curvature to the surface OS is different from one segment to another.

14. The tread according to any of the preceding claims wherein the medium axis forms an angle less than 15 degrees with said plane tangent to the surface OS.

15. A radial ply tire having its crown portion provided with a tread according to any of claims 1 to 14.
